(19) Europäisches Patentamt
European Patent Office
Office européen des brevets

(11) **EP 4 770 234 A1**

(12) **EUROPEAN PATENT APPLICATION**
published in accordance with Art. 153(4) EPC

(43) Date of publication:
**01.07.2026 Bulletin 2026/27**

(21) Application number: **23949392.7**

(22) Date of filing: **22.08.2023**

(51) International Patent Classification (IPC):
*H04W 72/0457* *(2023.01)*

(52) Cooperative Patent Classification (CPC):
**H04W 72/0457; Y02D 30/70**

(86) International application number:
**PCT/CN2023/114324**

(87) International publication number:
**WO 2025/039200 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **HE, Chuanfeng**
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(54) **RESOURCE DETERMINATION METHODS AND APPARATUSES, DEVICES, AND STORAGE MEDIUM**

(57) Resource determination methods and apparatuses, devices, and a storage medium, belonging to the technical field of mobile communications. A method is executed by a terminal device a comprises: on the basis of a frequency-domain offset, determining a wake-up frequency-domain resource, the wake-up frequency-domain resource being a frequency-domain resource used for receiving a wake-up signal by means of a first receiver of the terminal, and the wake-up signal being used for waking up a second receiver of the terminal device. A method is executed by a network device and comprises: on the basis of a frequency-domain offset, determining a wake-up frequency-domain resource; and sensing a wake-up signal on the basis of the wake-up frequency-domain resource. The frequency-domain offset is the offset between the wake-up frequency-domain resource and a frequency-domain bandwidth edge of a downlink bandwidth part (BWP) where the wake-up frequency-domain resource is located. Thus, on the basis of the frequency-domain offset, the wake-up frequency-domain resource of the network device to send the wake-up signal and for the terminal device to receive the wake-up signal is determined. Therefore, when the wake-up signal is multiplexed with an existing NR signal, fragmentation of the frequency-domain resources of the downlink BWP can be avoided, thereby ensuring the transmission performance of existing downlink signals.

FIG. 8

## Description

## TECHNICAL FIELD

Embodiments of the present disclosure relate to the field of communications, and in particular, relate to methods and apparatuses for determining a resource, and devices and a storage medium thereof.

## RELATED ART

With the development of mobile communications technology, network devices have evolved to being able to wake up terminal devices by transmitting wake-up signals.

However, in related arts, resources of the wake-up signals impact other existing signals.

## SUMMARY

Embodiments of the present disclosure provide a method and apparatus for determining a resource, and a device, and a storage medium. The technical solutions are as follows:

According to one aspect of the embodiments of the present disclosure, a method for determining a resource is provided. The method is performed by a terminal device, and includes:

determining a wake-up frequency-domain resource based on a frequency-domain offset, wherein the frequency-domain offset is an offset between the wake-up frequency-domain resource and a frequency-domain bandwidth edge of a downlink bandwidth part (BWP) containing the wake-up frequency-domain resource;

wherein the wake-up frequency-domain resource is a frequency-domain resource for receiving a wake-up signal via a first receiver of the terminal device, the wake-up signal being used to wake up a second receiver of the terminal device.

According to one aspect of the embodiments of the present disclosure, a method for determining a resource is provided. The method is performed by a network device, and includes:

determining a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource; and

transmitting a wake-up signal based on the wake-up frequency-domain resource; wherein the wake-up signal is a signal received by a terminal device via a first receiver of the terminal device, and the wake-up signal is used to wake up a second receiver of the terminal device.

According to another aspect of the embodiments of the present disclosure, an apparatus for determining a resource is provided. The apparatus includes:

a determining module, configured to determine a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource;

wherein the wake-up frequency-domain resource is a frequency-domain resource for receiving a wake-up signal via a first receiver of the terminal device, the wake-up signal being used to wake up a second receiver of the terminal device.

According to another aspect of the embodiments of the present disclosure, an apparatus for determining a resource is provided. The apparatus includes:

a determining module, configured to determine a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource; and

a transmitting module, configured to transmit a wake-up signal based on the wake-up frequency-domain resource; wherein the wake-up frequency-domain resource is a frequency-domain resource for receiving a wake-up signal via a first receiver of the terminal device, the wake-up signal being used to wake up a second receiver of the terminal device.

According to another aspect of the embodiments of the present disclosure, a terminal device is provided. The terminal device includes a processor, a memory, and a transceiver;

the memory stores one or more computer programs, wherein the processor, when loading and running the one or more computer programs, causes the terminal device to perform the method for determining a resource as described above.

According to another aspect of the embodiments of the present disclosure, a network device is provided. The network device includes a processor, a memory, and a transceiver;

the memory stores one or more computer programs, wherein the processor, when loading and running the one or more computer programs, causes the network device to perform the method for determining a resource as described above.

According to another aspect of the embodiments of the present disclosure, a computer-readable storage medium is further provided. The computer-readable storage medium stores one or more computer programs, wherein the one or more computer programs, when loaded and run by a processor, cause the processor to perform the method for determining a resource as described above.

According to another aspect of the embodiments of the present disclosure, a chip is further provided. The chip, when running in a communication device, causes the communication device to perform the method for determining a resource as described above.

According to another aspect of the embodiments of the present disclosure, a computer program product is provided. The computer program product includes one or more computer instructions stored in a computer-readable storage medium, and a processor of a communication device calls and executes the one or more computer instructions from the computer-readable storage medium to cause the communication device to perform the above method for determining a resource as described above.

According to another aspect of the embodiments of the present disclosure, a computer program is provided. A processor of a communication device calls and executes the computer program to cause the communication device to perform the above method for determining a resource as described above.

The method for determining a resource according to the embodiments of the present disclosure may determine a wake-up frequency-domain resource for the network device transmitting the wake-up signal and for the terminal device receiving the wake-up signal, wherein the frequency-domain offset is the offset between the wake-up frequency-domain resource and the frequency-domain bandwidth edge of the downlink BWP containing the wake-up frequency-domain resource, such that the network device and the terminal device may perform accurate transmission and reception of the wake-up signal in between.

**BRIEF DESCRIPTION OF DRAWINGS**

For clearer descriptions of the technical solutions according to the embodiments of the present disclosure, the following briefly illustrates drawings required for the description of the embodiments. Obviously, the illustrated drawings below are only some embodiments of the present disclosure. For ordinary persons skilled in the art, other drawings may be obtained based on these drawings without the premise of creative labor.

FIG. 1 is schematic diagram of a communication system architecture according to some embodiments of the present disclosure;
FIG. 2 is a schematic block diagram of a receiver system according to some embodiments of the present disclosure;

FIG. 3 is a schematic diagram of a process of generating a type of LP-WUS according to some embodiments of the present disclosure;
FIG. 4 is a schematic diagram of a process of generating another type of LP-WUS according to some embodiments of the present disclosure;
FIG. 5 is a schematic diagram of a process of generating another type of LP-WUS according to some embodiments of the present disclosure;
FIG. 6 is a schematic diagram of a process of generating another type of LP-WUS according to some embodiments of the present disclosure;
FIG. 7 is a schematic diagram of a frequency-domain position of a PUCCH according to some embodiments of the present disclosure;
FIG. 8 is a schematic flowchart of a method for determining a resource according to some embodiments of the present disclosure;
FIG. 9 is a schematic flowchart of a method for determining a resource according to some embodiments of the present disclosure;
FIG. 10 is a schematic flowchart of a method for determining a resource according to some embodiments of the present disclosure;
FIG. 11 is a schematic diagram of a wake-up frequency-domain position of a type of LP-WUS according to some embodiments of the present disclosure;
FIG. 12 is a schematic diagram of a wake-up frequency-domain position of another type of LP-WUS according to some embodiments of the present disclosure;
FIG. 13 is a schematic diagram of a wake-up frequency-domain position of another type of LP-WUS according to some embodiments of the present disclosure;
FIG. 14 is a schematic diagram of a wake-up frequency-domain position of another type of LP-WUS according to some embodiments of the present disclosure;
FIG. 15 is a schematic diagram of a wake-up frequency-domain position of another type of LP-WUS according to some embodiments of the present disclosure;
FIG. 16 is a schematic block diagram of an apparatus for determining a resource according to some embodiments of the present disclosure;
FIG. 17 is a schematic block diagram of an apparatus for determining a resource according to some embodiments of the present disclosure; and
FIG. 18 is a schematic structural diagram of a communication device according to some embodiments of the present disclosure.

**DETAILED DESCRIPTION**

For clearer descriptions of the objectives, technical solutions, and advantages of the present disclosure, the embodiments of the present disclosure are described in detail herein after in combination with the accompanying drawings.

The network architecture and service scenarios described in the embodiments of the present disclosure are intended to illustrate more clearly rather than to limit the technical solutions according to the embodiments of the present disclosure. Those skilled in the art understand that with evolution of the network architecture and emergence of new service scenarios, the technical solutions according to the embodiments of the present disclosure are also applicable to addressing similar technical problems.

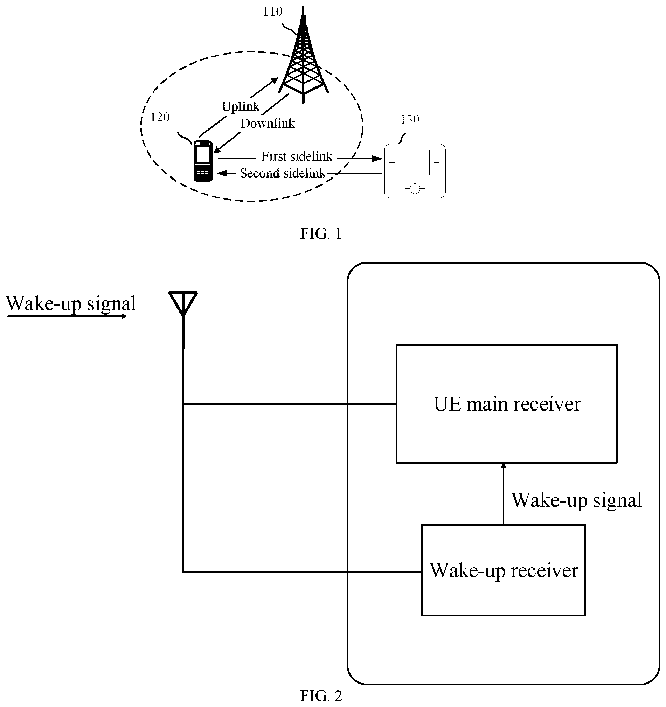

FIG. 1 is a schematic diagram of a communication system according to some embodiments of the present disclosure. The communication system includes a network device 110 and a terminal device 120, and/or a terminal device 120 and a terminal device 130, which is not limited in the present disclosure.

The network device 110 in the present disclosure provides wireless communication functions. The network device 110 includes but is not limited to: an evolved Node-B (eNB), a radio network controller (RNC), a Node-B (NB), a base station controller (BSC), a base transceiver station (BTS), a home base station (e.g., a home evolved Node-B, or a home Node-B, HNB), a baseband unit (BBU), an access point (AP) in a wireless fidelity (Wi-Fi) system, a wireless relay node, a wireless backhaul node, a transmission point (TP) or a transmission and reception point (TRP), or the like. The network device may also be a next generation Node-B (gNB) or a transmission reception point (a TRP or a TP) in a 5th generation (5G) mobile communication system, or one or a set of antenna panels (including a plurality of antenna panels) of a base station in the 5G system, or a network node constituting a gNB or a transmission point, such as a baseband unit (BBU) or a distributed unit (DU), or the like, or a base station in a beyond 5th generation (B5G), a 6th generation (6G) mobile communication system, or the like, or a core network (CN), a fronthaul, a backhaul, a radio access network (RAN), a network slice, or the like, or a serving cell, a primary cell (PCell), a primary secondary cell (PSCell), a special Cell (SpCell), a secondary cell (SCell), a neighbor cell, or the like, of the terminal.

In the present disclosure, the terminal 120 and/or the terminal 130 is also referred to as a user equipment (UE), an access terminal, a user unit, a user station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 and the terminal device 120 communicate with each other using some air interface technology, such as a Uu interface.

In some embodiments, two types of communication scenarios exist between the network device 110 and the terminal device 120: an uplink communication scenario and a downlink communication scenario. Uplink communication refers to transmitting signals to the network device 110; downlink communication refers to transmitting signals to the terminal device 120.

The terminal device 120 and the terminal device 130 communicate with each other using some air interface technology, such as a PC5 interface.

In some embodiments, two types of communication scenarios exist between the terminal 120 and the terminal device 130: a first sidelink communication scenario and a second sidelink communication scenario. The first sidelink communication refers to transmitting signals to the terminal device 130; the second sidelink communication refers to transmitting signals to the terminal device 120.

The terminal device 120 and the terminal device 130 are both within network coverage and located in the same cell, or the terminal device 120 and the terminal device 130 are both within network coverage but located in different cells, or the terminal device 120 is within network coverage, but the terminal device 130 is outside network coverage.

The technical solutions provided by the embodiments of the present disclosure may be applied to various communication systems, such as: a global system of mobile communication (GSM) system, a code-division multiple access (CDMA) system, a wideband code-division multiple access (WCDMA) system, a general packet radio service (GPRS) system, a long-term evolution (LTE) system, an LTE frequency division duplex (FDD) system, an LTE time division duplex (TDD) system, an advanced long-term evolution (LTE-A) system, a universal mobile telecommunication system (UMTS), a worldwide interoperability for microwave access (Wi-MAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a wireless fidelity (Wi-Fi) system, a cellular Internet of things (IoT) system, a cellular passive Internet of things system, and may also be applied to the subsequent evolution systems of 5G NR system, and may also be applied to B5G, 6G, and subsequent evolution systems. In some embodiments of the present disclosure, "NR" may also be referred to as 5G NR system or 5G system. Among them, the 5G mobile communication system may include non-standalone (NSA) and/or standalone (SA).

The technical solutions according to the embodiments of the present disclosure may also be applied to a machine-type communications (MTC), a long-term evolution-machine (LTE-M), a device-to-device (D2D) network, a machine-to-machine (M2M) network, an IoT network, or other networks. The IoT network may include an Internet of vehicles. The communication methods in the Internet of vehicles system are collectively referred to as vehicle-to-X (V2X, X represents anything). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

Before description of the technical solutions according to the present disclosure, some background technical knowledge relevant to the present disclosure is introduced and explained first. The following related technologies, as optional solutions, may be randomly combined with the technical solutions according to the embodiments of the present disclosure, which fall within the scope of protection of the embodiments of the present disclosure. The embodiments of the present disclosure include at least part of the following content.

1. Power saving technique for terminals based on a wake-up receiver

To further save power in UEs, 3GPP R18 standards consider introducing a wake-up receiver (WUR) to receive lower-power wake-up signals (LP-WUSs). The WUR has characteristics of extremely low costs, extremely low complexity, and extremely low power consumption, and the WUR receives wake-up signals mainly based on envelop detection. Therefore, the LP-WUS for the WUR is modulated in a different way and has a different waveform from signals carried over a physical downlink control channel (PDCCH) in the existing 3GPP R16 and R17 standards. The wake-up signal is mainly an envelope signal that is acquired by performing amplitude shift keying (ASK) modulation on a carrier signal. Demodulation of the envelope signal is also mainly achieved by driving a low power-consumption circuit based on the energy supplied by radio frequency signals, and thus the envelope signal is passive. The WUR may also be powered by a terminal. Regardless of the power supply method, the power consumption of the receiver is significantly reduced compared to the traditional receiver of the UE. The WUR may be used in combination with the UE, either as an additional module of the receiver of the UE or as an independent wake-up functional module for the UE.

FIG. 2 is a block diagram of a transceiver according to some embodiments of the present disclosure. As illustrated in FIG.2, the WUR receives a wake-up signal, and the UE is instructed to enable the primary receiver in a case where the receiver of the UE needs to be activated; and otherwise, the primary receiver of the UE is in a deactivated state.

2. Wake-up signal generation method based on WUR

The WUR must have low complexity to save power. Therefore, the wake-up signal is in an ASK waveform or a frequency shift keying (FSK) waveform, which may be detected by receivers with low complexity. The ASK waveform generally adopts an on-off keying (OOK) signal. In the existing orthogonal frequency division multiplexing (OFDM) system, an existing OFDM transmitter is to generate a wake-up signal so as to minimize additional hardware overhead. Moreover, the OOK signal is generated by multi-carrier (MC), and therefore the OOK signal is also referred to as an MC-OOK signal. The MC-OOK signal may be generated by the conventional multi-carrier modulation, for example, the OFDM modulation, which may maintain a good compatibility with the existing OFDM system, and reduce the complexity of the transmitter introduced resulting of implementing the WUR signal.

The WUS signal discussed in the 3GPP R18 standards is mainly generated by the following methods: The MC-ASK waveform is generated in the following manners, wherein K represents a size of the inverse discrete Fourier transform (IDTF), N represents a number of subcarriers used in transmission of the WUS.

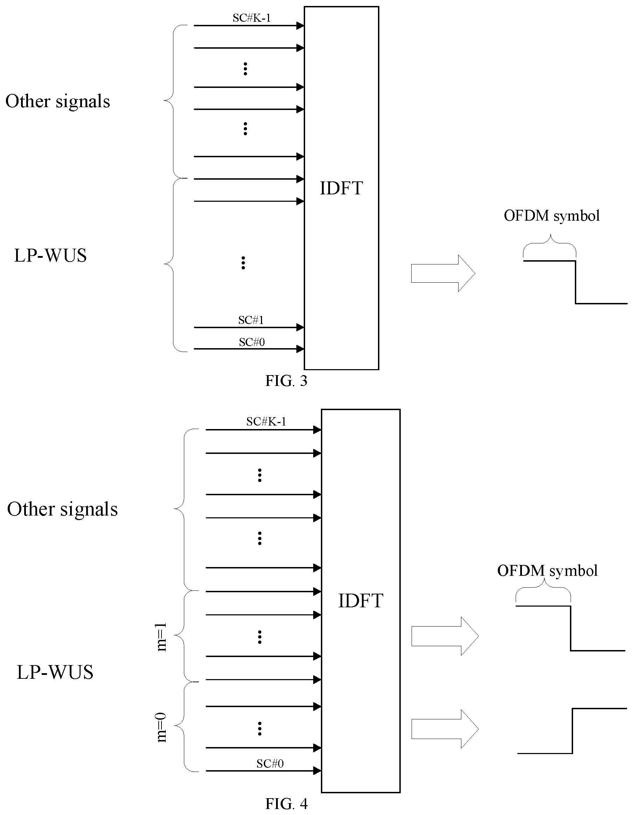

OOK-1: Each OFDM symbol carries one bit, wherein an output signal corresponding to the subcarrier carrying the LP-WUS upon modulation and IDFT is OOK=1, and the corresponding output signal is OOK=0 when the subcarrier carrying the LP-WUS is defined to have zero power. FIG. 3 is a schematic diagram of an LP-WUS generation process according to some embodiments of the present disclosure.

OOK-2: Each OFDM symbol carries M bits in a frequency-domain. The N subcarriers carrying the LP-WUS are divided into M segments, with each segment carrying one bit of information. Within each segment, in a case where all subcarriers are modulated, the corresponding output signal is OOK=1, and in a case where all subcarriers are defined to have zero power, the corresponding output signal is OOK=0. Taking M=2 as an example, FIG. 4 is a schematic diagram of an LP-WUS generation process according to some embodiments of the present disclosure.

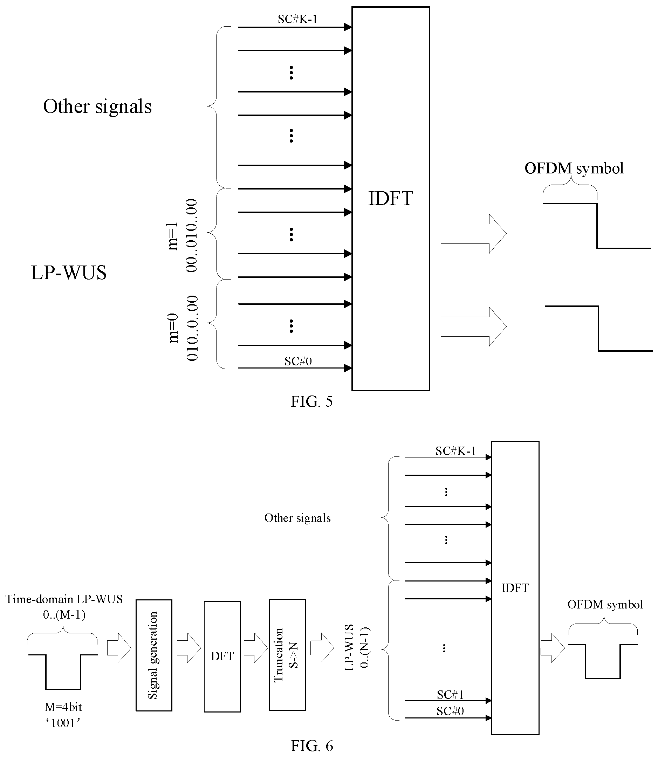

OOK-3: Each OFDM symbol carries one bit. The N subcarriers carrying the LP-WUS are divided into M segments. Within each of the M segments, in a case where one subcarrier is modulated and the other subcarriers are defined as zero power, the corresponding output signal is OOK=1; and in a case where all subcarriers in all segments are defined to have zero power, the corresponding output signal is OOK=0. FIG. 5 is a schematic diagram of an LP-WUS generation process according to some embodiments of the present disclosure.

OOK-4: Each OFDM symbol carries M bits in a time domain. The N subcarriers carrying the LP-WUS are generated by performing discrete Fourier transformation (DFT). The M bits are represented by S sampling points. Following the DFT, the S sampling points form S subcarriers. Processes such as truncation are performed on the S subcarriers to form N subcarriers. Subsequently, IDFT is performed to generate the OOK signal. Taking M=4 as an example, FIG. 6 a schematic diagram of an LP-WUS generation process according to some embodiments of the present disclosure.

In addition to the MC-ASK waveform, the LP-WUS may adopt an MC-FSK waveform, mainly including the following schemes.

FSK-1: The N subcarriers carrying the LP-WUS are organized into M pairs of segments. In each OFDM symbol, one segment in each pair of segments is modulated, while the other segment in each pair of segments is defined to have zero-power.

FSK-2: The N subcarriers carrying the LP-WUS are organized into $2^M$ segments. In each OFDM symbol, one segment in the $2^M$ segments is modulated, while the other segments in the $2^M$ segments are defined as zero-power.

3. Public PUCCH resource

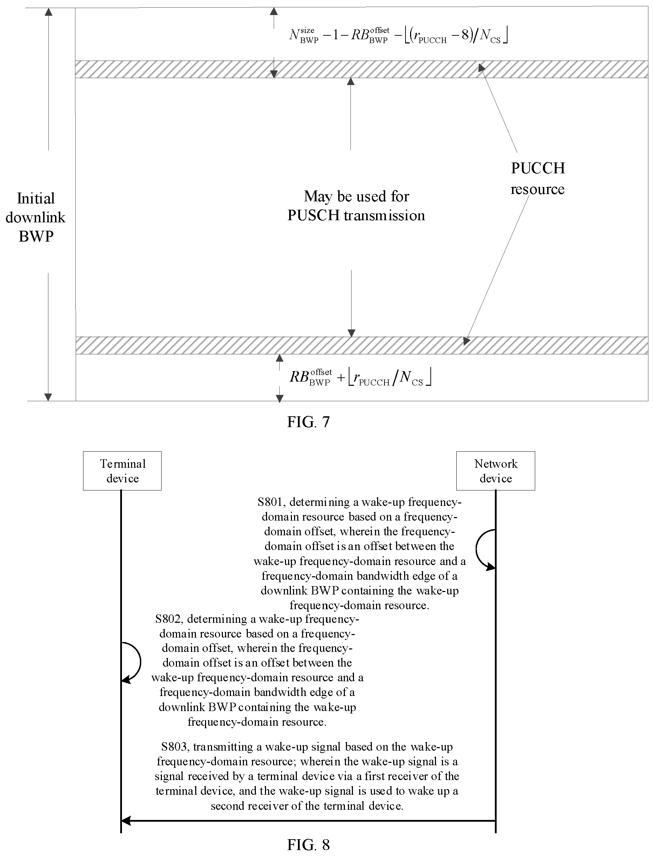

During initial access by the UE, such as a random access procedure, hybrid-automatic repeat request (HARQ) feedback information regarding Msg4 or MsgB needs to be transmitted over a physical uplink control channel (PUCCH). Due to lack of configuration for a PUCCH resource set specific for the UE, a predefined PUCCH resource set is used. The predefined PUCCH resource set is only used for the HARQ feedback information, such that the PUCCH resources in the predefined PUCCH resource set only need to carry one or two bits of the HARQ feedback information, i.e., the HARQ feedback information only consists of a PUCCH format 0 and a PUCCH format 1. A base station configures a common PUCCH resource set for all UEs prior to establishing the radio resource control (RRC) over a system information block (SIB) 1. A frequency-domain position of the PUCCH resource is located at both ends of the bandwidth of the initial uplink bandwidth part (BWP), and is determined by a frequency-domain offset from the edge of the bandwidth. In this way, the PUCCH is prevented from occupying the middle position of the bandwidth, causing fragmentation of frequency-domain resources, such that the network fails to schedule transmission of a physical uplink shared channel (PUSCH) on contiguous frequency-domain resources within the initial uplink BWP. Consequently, it is impossible for the PUSCH to acquire large scheduling resources. FIG. 7 is a schematic diagram of the frequency-domain resource position of the PUCCH according to some embodiments of the present disclosure. As illustrated in FIG. 7, the frequency-domain position of the PUCCH is determined by subtracting a frequency-domain offset from the upper frequency-domain edge of the bandwidth of the initial uplink BWP or by adding a frequency-domain offset to the lower frequency-domain edge, thereby ensuring the largest possible contiguous bandwidth in the middle of the initial uplink BWP.

To be compatible with existing systems and to fully utilize resources, the LP-WUS is introduced in the 3GPP R18 standards. In a case where a terminal device adopts a WUR to receive the WUS, the WUS signal transmitted by the network device is preferably compatible with an existing OFDM transmitter and may be multiplexed with an existing NR signal within the frequency band, rather than transmitting the WUS signal over separate frequency band resource.

The LP-WUS mainly indicates whether the UE in the RRC idle/inactive state needs to activate a main receiver to receive a paging message. The UE in the RRC idle/inactive state generally operates in the initial BWP, wherein an initial downlink BWP is mainly used to carry a system message, a paging message, and to transmit a random access downlink message (Msg); while an initial uplink BWP is used to transmit an uplink Msg for initial access. How the LP-WUS, as a downlink signal, coexists with other signals in the initial downlink BWP is an issue that needs to be solved.

In related arts, during cell search, the initial downlink BWP is determined by the bandwidth of a control resource set (CORESET) #0 carried by a physical broadcast channel (PBCH). Upon acquisition of a system message, the initial downlink BWP may be indicated by the system message. The initial downlink BWP may carry a PDCCH, a physical downlink shared channel (PDSCH), a synchronization signal block (SSB), or the like. The bandwidth of PDCCH is determined by the CORESET, and the PDCCH may schedule the frequency-domain resources of PDSCH to carry the system message, the paging message, or the like. The system message and paging message are all public messages. For this reason, scheduling the frequency-domain resource as large as possible is beneficial to the payload and coverage carried by the PDSCH. Therefore, it is necessary to avoid the fragmentation of frequency-domain resources.

FIG. 8 is a schematic flowchart of a method for determining a resource according to some embodiments of the present disclosure. The method may be interactively performed by a terminal device and a network device, wherein the terminal device may be the terminal device 120 or the terminal device 130 in the network illustrated in FIG. 1, and the network device may be network device 110 in the network illustrated in FIG. 1. The method may include the following steps:

In step 801, the network device determines a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource.

That is, the network device may determine the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource.

Specifically, the frequency-domain offset may be an offset between the wake-up frequency-domain resource and any frequency-domain bandwidth edge of the downlink BWP containing the wake-up frequency-domain resource, or an offset between the wake-up frequency-domain resource and two frequency-domain bandwidth edges of the downlink BWP containing the wake-up frequency-domain resource.

For example, the wake-up frequency-domain resource may be the frequency-domain resource corresponding to a contiguous frequency-domain resource interval. In this case, the frequency-domain offset may be an offset between an interval end point of the frequency-domain resource and any frequency-domain bandwidth edge of the downlink BWP containing the wake-up frequency-domain resource.

As another example, the wake-up frequency-domain resource may include the frequency-domain resource corresponding to two or more contiguous frequency-domain resource intervals. In this case, the frequency-domain offset may include the offset between the interval end point of each frequency-domain resource interval and any frequency-domain bandwidth edge of the downlink BWP containing the wake-up frequency-domain resource.

For example, the wake-up frequency-domain resource may be the frequency-domain resource corresponding to two contiguous frequency-domain resource intervals, wherein a frequency-domain resource interval 1 is near the side of a low frequency band within the downlink BWP, and a frequency-domain resource interval 2 is near a high frequency within the downlink BWP. The frequency-domain offset may include the offset between the interval end point of the frequency-domain resource interval 1 (such as the interval end point of a high frequency-band) and the frequency-domain bandwidth edge of the side of the low frequency band within the downlink BWP, and the offset between the interval end point of the frequency-domain resource interval 2 (such as the interval end point of a lower frequency-band) and the frequency-domain bandwidth edge of the side of the high frequency band within the downlink BWP.

In step 802, the terminal device determines the wake-up frequency-domain resource based on the frequency-domain offset, wherein the frequency-domain offset is an offset between the wake-up frequency-domain resource and the frequency-domain bandwidth edge of a downlink BWP containing the wake-up frequency-domain resource.

In step 803, the network device transmits a wake-up signal based on the wake-up frequency-domain resource; and accordingly, the terminal device may receive the wake-up signal via a first receiver, wherein the wake-up signal is used to wake up a second receiver of the terminal device.

That is, the network device transmits the wake-up signal based on the wake-up frequency-domain resource, and the terminal device determines whether to receive the wake-up signal. In a case where the terminal device determines to receive the wake-up signal, the wake-up signal is received via the first receiver based on the wake-up frequency-domain resource, the wake-up signal being used to wake up a second receiver of the terminal device.

In the embodiments of the present disclosure, the wake-up signal may be an LP-WUS, and the downlink BWP may be an initial downlink BWP.

In the above technical solution, the network device may determine to carry the LP-WUS over one edge or both edges of the frequency-domain resource within the downlink BWP. Accordingly, the terminal device may receive the LP-WUS over one edge or both edges of the frequency-domain resource within the downlink BWP. In this way, fragmentation of the frequency-domain resources with the initial downlink BWP may be prevented, thereby reducing the impact on a resource usage of existing NR signals within the initial downlink BWP.

In addition to the initial downlink BWP, in a case where the LP-WUS is transmitted within a non-initial downlink BWP, the method embodiments of the present disclosure may also be used. For example, in a case where the UE is in an RRC-connected state, the terminal device and the network device may also determine a frequency-domain position of the wake-up frequency-domain resource for the LP-WUS according to the above method within the downlink BWP configured by the network device via an RRC signal.

In summary, the technical solution according to the embodiments of the present disclosure may determine the wake-up frequency-domain resource for the network device transmitting the wake-up signal and for the terminal device receiving the wake-up signal, wherein the frequency-domain offset is the offset between the wake-up frequency-domain resource and the frequency-domain bandwidth edge of the downlink BWP containing the frequency-domain resource. In this way, the network device and the terminal device may perform accurate transmission and reception of the wake-up signal, improving the efficiency of the transmission and reception of the wake-up signal, thereby further enhancing the power saving effect of the system.

Moreover, the LP-WUS may be carried on one end or both ends of the frequency resource of the downlink BWP, Therefore, in a case where the wake-up signal and the NR signal are multiplexed, fragmentation of the frequency-domain resources within the downlink BWP is avoided, ensuring that a larger contiguous bandwidth is preserved in the middle of the downlink BWP. In this way, the use of frequency-domain resources for the existing downlink signals is not affected, thereby ensuring the transmission performance of the existing downlink signals.

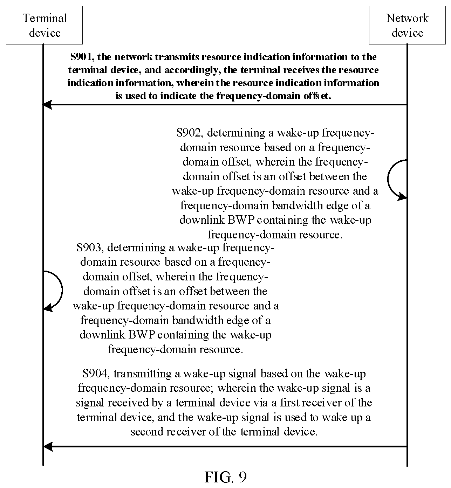

Based on the technical solution illustrated in FIG. 8, FIG. 9 is a flowchart of a method for determining a resource according to some embodiments of the present disclosure. The method may be performed interactively by the terminal device and the network device. The terminal device may be the terminal device 120 or the terminal device 130 in the network illustrated in FIG. 1, and the network device may be network device 110 in the network illustrated in FIG.1. The method may include the following steps.

In step 901, the network device transmits resource indication information to the terminal device; and accordingly, the terminal device receives the resource indication information, wherein the resource indication information is used to indicate the frequency-domain offset.

That is, the frequency-domain offset may be indicated by the resource indication information, wherein the resource indication information is transmitted by the network device.

That is, the resource indication information transmitted by the network device may be used to indicate the offset between the wake-up frequency-domain resource and the frequency-domain bandwidth edge of the downlink BWP containing the wake-up frequency-domain resource.

For example, the network may indicate the frequency-domain offset from the wake-up frequency-domain resource for the LP-WUS to the high frequency-domain edge or to the low frequency-domain edge via a system message, an RRC message or a medium access control (MAC) control element (MAC CE) and the like.

The system message may indicate the frequency-domain offset from the start point or end point of the wake-up frequency-domain resource of the LP-WUS to the high/low frequency-domain edge.

In the embodiments of the present disclosure, the wake-up frequency-domain resource for the wake-up signal may be determined based on the offset between the wake-up frequency-domain resource and the frequency-domain bandwidth edge of the downlink BWP containing the wake-up frequency-domain resource, such that accurate transmission and reception of the wake-up signal may be performed between the network device and the terminal device, thereby improving the efficiency of transmission and reception of the wake-up signal, and further enhancing the power saving effect of the system.

In the embodiments of the present disclosure, the wake-up signal may be the LP-WUS, and the downlink BWP may be the initial downlink BWP.

It should be noted that, regarding the downlink BWP (e.g., the initial downlink BWP), the wake-up frequency-domain resources for the LP-WUS may be configured to one end or both ends of the downlink BWP to avoid fragmentation of the frequency-domain resources, or may be configured to the frequency-domain positions near one end or both ends of the downlink BWP.

That is, the frequency-domain resources on one end or both ends of the downlink BWP used to carry the LP-WUS may be determined by the terminal device via indication information, such that fragmentation of the frequency-domain resources within the initial downlink BWP may be prevented, thereby reducing the impact on a resource usage of existing NR signals within the initial downlink BWP.

In addition to the initial downlink BWP, in a case where the LP-WUS signal is transmitted over a non-initial downlink BWP, the method embodiments of the present application may also be used. For example, in a case where the UE is in an RRC-connected state, the terminal device and the network device may also determine the frequency-domain position of the wake-up frequency-domain resource for the LP-WUS signal in the downlink BWP configured by the network device via RRC signaling according to the above method.

In the technical solutions according to the embodiments of the present disclosure, the frequency-domain offset may be indicated by the resource indication information transmitted by the network device, so as to determine the wake-up frequency-domain resource for the wake-up signal. Therefore, fragmentation of the frequency-domain resources within the downlink BWP is avoided, ensuring that a larger contiguous bandwidth is preserved in the middle of the downlink BWP. In this way, the use of frequency-domain resources for the existing downlink signals is not affected, thereby ensuring the transmission performance of the existing downlink signals.

In step 902, the network device determines the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource.

That is, the network device may determine the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource.

Specifically, the frequency-domain offset may be the offset between the wake-up frequency-domain resource and any frequency-domain bandwidth edge of the downlink BWP containing the wake-up frequency-domain resource, or the offset between the wake-up frequency-domain resource and two frequency-domain bandwidth edges of the downlink BWP containing the wake-up frequency-domain resource.

In step 903, the terminal device determines the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource.

That is, the terminal device may also determine the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource.

In step 904, the network device transmits resource indication information to the terminal device; and accordingly, the terminal device receives the resource indication information, wherein the resource indication information is used to indicate the frequency-domain offset.

The terminal device may receive the wake-up signal over the wake-up frequency-domain resource via a first receiver.

That is, the network device transmits the wake-up signal based on the wake-up frequency-domain resource, and the terminal device determines whether to receive the wake-up signal. In a case where the terminal device determines to receive the wake-up signal, the wake-up signal is received by the first receiver based on the wake-up frequency-domain resource, wherein the wake-up signal is used to wake up a second receiver of the terminal device.

In some embodiments, the resource indication information is also used to indicate a bandwidth of the wake-up frequency-domain resource.

That is, the resource indication information transmitted by the network device may be used not only to indicate the frequency-domain offset, but also to indicate the bandwidth of the wake-up frequency-domain resource.

The embodiments of the present disclosure further clarify that the resource indication information transmitted by the network device may also be used to indicate the bandwidth of the wake-up frequency-domain resource, thereby improving the flexibility of indicating the wake-up frequency-domain resources.

In some other embodiments, the bandwidth of the wake-up frequency-domain resource may be predefined by communication protocols; or configured by the network device over other signaling preceding the resource indication information. For example, the network device may configure the bandwidth of the wake-up frequency-domain resource for the terminal device over a system message, and subsequently indicate the frequency-domain offset of the wake-up frequency-domain resource over an RRC message or a MAC CE.

In some embodiments, the frequency-domain offset varies across different time intervals.

That is, the offset between the wake-up frequency-domain resource and the frequency-domain bandwidth edge of a downlink BWP containing the wake-up frequency-domain resource may be different within different time intervals. And the network device may instruct the terminal device to determine the wake-up frequency-domain resource using different frequency-domain offsets within different time intervals.

Since the signals transmitted by the initial downlink BWP within different times may vary, the bandwidth and the frequency-domain positions of the signals within the initial downlink BWP may also vary.

For example, in a case where the initial downlink BWP is transmitting an SSB signal within a time interval Ta, and transmitting a PDCCH signal within a time interval Tb, the bandwidth of the SSB signal and of the PDCCH signal, as well as the frequency-domain positions of the SSB signal and of the PDCCH signal are different. The frequency-domain offset needs to be determined based on the SSB signal within the time interval Ta; and the frequency-domain offset needs to be determined based on the PDCCH signal within the time interval Tb. In this way, within the time interval Ta and the time interval Tb, the frequency-domain offset indicated by the network device over the resource indication information may vary.

The embodiments of the present disclosure further clarify that the association between the offset and the time interval improves the accuracy and flexibility of indicating the wake-up frequency-domain resources.

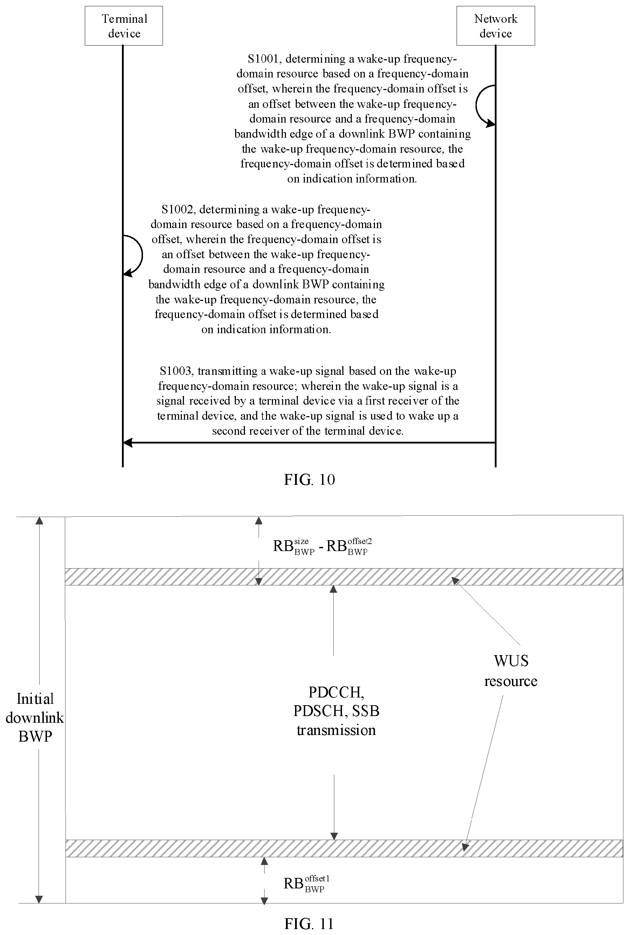

Based on the technical solution illustrated in FIG. 8, FIG. 10 is a flowchart of a method for determining a resource according to some embodiments of the present disclosure. The terminal device may be the terminal device 120 or the terminal device 130 in the network illustrated in FIG. 1, and the network device may be network device 110 in the network illustrated in the same. The method may include the following steps.

In step 1001, the network device determines the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource, wherein the frequency-domain offset is determined based on indication information.

That is, the network device may determine the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource, and the frequency-domain offset may be determined by the network device based on the indication information.

Specifically, the frequency-domain offset may be the offset between the wake-up frequency-domain resource and any frequency-domain bandwidth edge of the downlink BWP containing the wake-up frequency-domain resource, or the offset between the wake-up frequency-domain resource and two frequency-domain bandwidth edges of the downlink BWP containing the wake-up frequency-domain resource.

In step 1002, the terminal device determines the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource, the frequency-domain offset being determined based on indication information.

That is, the terminal device may determine the wake-up frequency-domain resource based on the frequency-domain offset, wherein the frequency-domain offset is the offset between the wake-up frequency-domain resource and the frequency-domain bandwidth edge of the downlink BWP containing the wake-up frequency-domain resource, and the frequency-domain offset may be determined by the terminal device based on the indication information.

Specifically, the frequency-domain offset may be the offset between the wake-up frequency-domain resource and any frequency-domain bandwidth edge of the downlink BWP containing the wake-up frequency-domain resource, or the offset between the wake-up frequency-domain resource and two frequency-domain bandwidth edges of the downlink BWP containing the wake-up frequency-domain resource.

In step 1003, the network device transmits a wake-up signal based on the wake-up frequency-domain resource; and accordingly, the terminal device may receive the wake-up signal via a first receiver, wherein the wake-up signal is used to wake up a second receiver of the terminal device.

That is, the network device transmits the wake-up signal based on the wake-up frequency-domain resource, and the terminal device determines whether to receive the wake-up signal. In a case where the terminal device determines to receive the wake-up signal, the wake-up signal is received by the first receiver based on the wake-up frequency-domain resource, wherein the wake-up signal is used to wake up a second receiver of the terminal device.

In the embodiments of the present disclosure, the wake-up signal may be the LP-WUS, and the downlink BWP may be the initial downlink BWP, or the non-initial downlink BWP.

It should be noted that, regarding the initial downlink BWP, the wake-up frequency-domain resources for the LP-WUS may be configured to both ends of the initial downlink BWP to prevent fragmentation of the frequency-domain resources.

That is, the frequency-domain resources on one end or both ends of the initial downlink BWP used to carry the LP-WUS may be determined by the terminal device via indication information, such that fragmentation of the frequency-domain resources within the initial downlink BWP may be prevented, thereby reducing the impact on a resource usage of existing NR signals within the initial downlink BWP.

In addition to the initial downlink BWP, in a case where the LP-WUS signal is transmitted over a non-initial downlink BWP, the method embodiments of the present disclosure may also be used. For example, in a case where the UE is in an RRC-connected state, the terminal device and the network device may also determine the frequency-domain position of the wake-up frequency-domain resource for the LP-WUS signal in the downlink BWP configured by the network device via RRC signaling according to the above method.

In the technical solution according to the embodiments of the present disclosure, the frequency-domain offset may be determined based on the indication information, and the wake-up frequency-domain resource may be determined based on the frequency-domain offset. At the same time, the wake-up frequency-domain resource may be located at/near one end or both ends of the downlink BWP. Therefore, fragmentation of the frequency-domain resources within the downlink BWP is avoided, ensuring that a larger contiguous bandwidth is preserved in the middle of the downlink BWP. In this way, the use of frequency-domain resources for the existing downlink signals is not affected, thereby ensuring the transmission performance of the existing downlink signals.

In some embodiments, the indication information includes at least one of:

- a bandwidth of the downlink BWP containing the wake-up frequency-domain resource;
- a position of the SSB within the downlink BWP containing the wake-up frequency-domain resource;
- a position of a bandwidth of the CORESET within the downlink BWP containing the wake-up frequency-domain resource;
- a time-domain pattern of the SSB;
- a time-domain pattern of the PDCCH; or
- a multiplexing pattern of the SSB and the PDCCH.

That is, the indication information may be at least one of:

(1) The bandwidth of the initial downlink BWP

Based on a size of the bandwidth, the terminal device and/or the network device may calculate the frequency-domain offset of the wake-up frequency-domain resource.

A bandwidth ratio may be predefined or configured in the terminal device and/or the network device. For example, the bandwidth ratio range may be configured to 8% to 12%, and the frequency-domain offset of the wake-up frequency-domain resource is a product of the bandwidth of the initial downlink BWP and the bandwidth ratio. For example, in a case where the bandwidth of the initial downlink BWP is 20 MHz, and the bandwidth ratio predefined or configured is 10%, and consequently the frequency-domain offset of the wake-up frequency-domain resource is 20 MHz * 10% = 2 MHz.

(2) The position of the SSB in the downlink BWP

In the embodiments of the present disclosure, a frequency-domain spacing of the frequency-domain position of the SSB from the edge may be determined based on the position of the SSB within the initial downlink BWP. Subsequently, the frequency-domain offset may be determined based on the frequency-domain spacing. In this way, the frequency-domain offset is controlled to ensure that the wake-up frequency-domain resource is not overlapped with the SSB in the frequency-domain.

The SSB may be located in a predetermined synchronization raster, and the position of the SSB within the initial downlink BWP may be configured to be flexible. For example, the frequency-domain bandwidth occupied by the SSB includes 20 resource blocks centered on the synchronization raster, and the position of the frequency-domain bandwidth occupied by the SSB within the BWP determines the spacing between the SSB and the edge of the BWP. In this way, the frequency-domain offset of the wake-up frequency-domain resource may be limited to not being larger than the frequency-domain spacing between the frequency-domain bandwidth occupied by the SSB and the edge of the BWP.

Furthermore, the frequency-domain offset may be determined based on the frequency-domain spacing to ensure that there is no frequency overlap between the wake-up frequency-domain resource and the SSB.

(3) The position of the bandwidth of the CORESET within the initial downlink BWP

In the embodiments of the present disclosure, a frequency-domain spacing of the frequency-domain position of the CORESET from the edge may be determined based on the position of the CORESET within the initial downlink BWP. Subsequently, the frequency-domain offset is determined based on the frequency-domain spacing, ensuring that there is no frequency overlap between the frequency-domain resource and the CORESET.

The frequency-domain resource of the CORESET is indicated by the SSB, or configured by the system message. The frequency-domain position of the CORESET is relatively flexible within the initial downlink BWP.

In this technical solution, the spacing between the CORESET and the edge of the BWP may be determined by the determined position of the bandwidth of the CORESET within the initial downlink BWP, such that the frequency-domain offset of the wake-up frequency-domain resource may be limited to not being larger than the frequency-domain spacing between the frequency-domain bandwidth occupied by the CORESET and the edge of the BWP.

Furthermore, the frequency-domain offset may be determined based on the frequency-domain spacing to ensure that there is no frequency overlap between the wake-up frequency-domain resource and the CORESET.

(4) The time-domain pattern of the SSB or the PDCCH

The time-domain resource for transmitting the SSB is indicated by the system message, and a monitoring occasion and the frequency-domain resource of the PDCCH is determined by search space information indicated by the system message. In this way, different frequency-domain offsets may be determined in different times based on the time-domain pattern.

The time-domain pattern of the PDCCH is a periodic monitoring occasion, i.e., the possible times when the PDCCH may be transmitted. At this time, it is necessary to consider the difference in the frequency-domain offset of the wake-up frequency-domain resource between a case where there is no PDCCH transmission and a case where there is PDCCH transmission. Accordingly, the method of calculating the frequency-domain offset in the two cases may vary.

Furthermore, the frequency-domain offsets need to be separately determined within the time intervals where there is PDCCH transmission and where there is no PDCCH transmission, such that there is no frequency-domain overlap between the wake-up frequency-domain resource and the PDCCH.

(5) The multiplexing pattern of the SSB and the PDCCH

The multiplexing pattern of the SSB and the PDCCH may include time division, frequency division, and time-frequency division. It is necessary for the frequency division and the time division to consider the bandwidths of the SSB and of the PDCCH following a frequency-domain superposition and their positions within the initial downlink BWP and determine the frequency-domain spacing between the frequency-domain position of the bandwidth following the frequency-domain superposition and the edge, and determine the frequency-domain offset based on the frequency-domain spacing, such that there is no frequency-domain overlap between the wake-up frequency-domain resource and the bandwidth following the frequency-domain superposition.

The embodiments of the present disclosure further clarify that the types of indication information include at least one of: the bandwidth of the downlink BWP containing the wake-up frequency-domain resource, the position of the SSB within the downlink BWP containing the wake-up frequency-domain resource, the position of the CORESET within the downlink BWP containing the wake-up frequency-domain resource, the time-domain pattern of the SSB, the time-domain pattern of the PDCCH, or the multiplexing pattern of the SSB and the PDCCH. In this way, the flexibility of the technical solution of the present disclosure is improved.

That is, in the technical solution according to the present disclosure, the frequency-domain offset between the frequency-domain resource and the frequency-domain bandwidth edge may be determined based on predetermined rules, wherein the predetermined rules may be adopted to determine the frequency-domain offset based on the above one or more types of information.

In some embodiments, the frequency-domain offset is associated with the frequency-domain position of the SSB within the downlink BWP containing the wake-up frequency-domain resource; and the wake-up frequency-domain resource is not overlapped with the frequency-domain resource of the SSB within the downlink BWP.

The frequency-domain offset is the offset between the wake-up frequency-domain resource and the frequency-domain bandwidth edge of the downlink BWP containing the wake-up frequency-domain resource, and the frequency-domain offset is not overlapped with the frequency-domain resource of the SSB within the downlink BWP. Therefore, fragmentation of the frequency-domain resources within the downlink BWP is avoided, ensuring that a larger contiguous bandwidth is preserved in the middle of the downlink BWP. In this way, the use of frequency-domain resources for the existing SSB and PDCCH signals is not affected, thereby ensuring the transmission performance of the existing SSB and PDCCH signals.

In some embodiments, the frequency-domain offset is associated with the frequency-domain position of the PDCCH within the downlink BWP containing the wake-up frequency-domain resource; and the wake-up frequency-domain resource is not overlapped with the frequency-domain resource of the PDCCH within the downlink BWP.

The frequency-domain offset is the offset between the wake-up frequency-domain resource and the frequency-domain bandwidth edge of the downlink BWP containing the wake-up frequency-domain resource, and the frequency-domain offset is not overlapped with the frequency-domain resource of the PDCCH within the downlink BWP. In this way, fragmentation of the frequency-domain resources within the downlink BWP is avoided, ensuring that the middle of the downlink BWP retains the largest possible contiguous bandwidth. In this way, the use of frequency-domain resources of the existing PDCCH signals is not affected, thereby ensuring the transmission performance of the existing PDCCH signals.

In some embodiments, the frequency-domain offset is associated with the frequency-domain position of the CORESET within the downlink BWP containing the wake-up frequency-domain resource; and the wake-up frequency-domain resource is not overlapped with the frequency-domain resource of the CORESET within the downlink BWP.

The frequency-domain offset is the offset between the wake-up frequency-domain resource and the frequency-domain bandwidth edge of the downlink BWP containing the wake-up frequency-domain resource, and the frequency-domain offset is not overlapped with the frequency-domain resource of the CORESET within the downlink BWP. Therefore, fragmentation of the frequency-domain resources within the downlink BWP is avoided, ensuring that the middle of the downlink BWP retains the largest possible contiguous bandwidth. In this way, the use of frequency-domain resources of the existing CORESET signals is not affected, thereby ensuring the transmission performance of existing CORESET signals.

In some embodiments, the frequency-domain offset is associated with the bandwidth of the downlink BWP containing the wake-up frequency-domain resource.

That is, the frequency-domain offset is related to the bandwidth of the downlink BWP containing the wake-up frequency-domain resource, and the frequency-domain offset is the offset between the wake-up frequency-domain resource and the frequency-domain bandwidth edge of the downlink BWP containing the wake-up frequency-domain resource. Therefore, fragmentation of the frequency-domain resources within the downlink BWP is avoided, ensuring that a larger contiguous bandwidth is preserved in the middle of the downlink BWP. In this way, the use of frequency-domain resources for the existing signals is not affected, thereby ensuring the transmission performance of the existing signals.

Specifically, the wake-up frequency-domain offset may be calculated based on the size of the bandwidth of the initial downlink BWP using some specific equation. For example, in a case where a width of the initial downlink BWP is 40 MHz, the wake-up frequency-domain offset is 4 MHz.

In some embodiments, the frequency-domain offset is associated with the position of other signals transmitted within the downlink BWP containing the wake-up frequency-domain resource, wherein the other signals are signals other than the wake-up signal.

That is, the frequency-domain offset is related to the position of other signals transmitted by the downlink BWP containing the wake-up frequency-domain resource, wherein the other signals are signals other than the wake-up signal such as SSB signals, PDCCH signals, PDSCH signals, or paging signals.

That is, the frequency-domain offset is the offset between the wake-up frequency-domain resource and the frequency-domain bandwidth edge of the downlink BWP containing the wake-up frequency-domain resource, and the frequency-domain offset is not overlapped with the other signals transmitted within the downlink BWP containing the wake-up frequency-domain resource. Therefore, fragmentation of the frequency-domain resources within the downlink BWP is avoided, ensuring that a larger contiguous bandwidth is preserved in the middle of the downlink BWP. In this way, the use of frequency-domain resources for the other existing signals is not affected, thereby ensuring the transmission performance of the other existing signals.

Specifically, the frequency-domain offset may be the offset from the wake-up frequency-domain resource to the high/low frequency-domain edge, wherein the offset from the wake-up frequency-domain resource to the high frequency-domain edge may or may not be the same as the offset from the wake-up frequency-domain resource to the low frequency-domain edge.

More specifically, the frequency-domain offset may be the offset from the starting point/ending point of the wake-up frequency-domain resource to the high/low frequency-domain edge, wherein the offset from the starting point/end point of the wake-up frequency-domain resource to the high frequency-domain edge may or may not be the same as the offset from the starting point/end point of the wake-up frequency-domain resource to the low frequency-domain edge.

For example, the frequency-domain offset from the wake-up frequency-domain resource of the LP-WUS to the low frequency-domain edge is $RB_{BWP}^{offset1}$, and the frequency-domain offset from the wake-up frequency-domain resource of the LP-WUS to the high frequency-domain edge is $RB_{BWP}^{offset2}$. FIG. 11 is a schematic diagram of the wake-up frequency-domain position of a type of LP-WUS according to some embodiments of the present disclosure. As illustrated in FIG. 11, the frequency resource gradually increases from the bottom, and the frequency of the start point of the wake-up frequency-domain resource is lower than the frequency of the end point. In this case, $RB_{BWP}^{offset1}$ and $RB_{BWP}^{offset2}$ respectively represent the frequency-domain offsets from the wake-up frequency-domain resource of the LP-WUS to the low frequency-domain edge and from the wake-up frequency-domain resource of the LP-WUS to the high frequency-domain edge. Therefore, $RB_{BWP}^{offset}$ and $RB_{BWP}^{size} - RB_{BWP}^{offset2}$ respectively represent the frequency-domain offsets from the start point of the wake-up frequency-domain resource to the low frequency-domain edge and the high frequency-domain edge. Additionally, the frequency-domain resource between the two intervals of the wake-up frequency-domain resource is used to transmit the PDCCH, the PDSCH and/or the SSB.

In some embodiments, the frequency-domain offset is associated with the multiplexing pattern of the SSB and the PDCCH within the downlink BWP.

That is, the frequency-domain offset is related to the multiplexing pattern of the SSB and the PDCCH within the downlink BWP, wherein the multiplexing pattern of the SSB and the PDCCH may include time division, frequency division and time-frequency division.

It should be noted that the frequency-domain offset is the offset between the wake-up frequency-domain resource and the frequency-domain bandwidth edge of the downlink BWP containing the wake-up frequency-domain resource, and the frequency-domain offset is not overlapped with the frequency-domain resource of the multiplexing pattern of the SSB and the PDCCH within the downlink BWP. Therefore, fragmentation of the frequency-domain resources within the downlink BWP is avoided, ensuring that a larger contiguous bandwidth is preserved in the middle of the downlink BWP. In this way, the use of frequency-domain resources for the existing SSB and PDCCH signals is not affected, thereby ensuring the transmission performance of the existing SSB and PDCCH signals.

In some embodiments, in a case where the signal transmitted in the downlink BWP includes the SSB and the PDCCH within a first time interval indicated by the multiplexing pattern, the frequency-domain offset within the first time interval is associated with the frequency-domain resource of the SSB and the PDCCH within the first time interval; and the wake-up frequency-domain resources within the first time interval is not overlapped with the frequency-domain resources of the SSB and the PDCCH within the first time interval.

That is, under time division, it is necessary to consider the positions of the frequency-domain resources of the SSB and the PDCCH within the initial downlink BWP within the same time interval, and the frequency-domain offset is not overlapped with the frequency-domain resources of the SSB and the PDCCH. Therefore, fragmentation of the frequency-domain resources within the downlink BWP is avoided, ensuring that a larger contiguous bandwidth is preserved in the middle of the downlink BWP. In this way, the use of frequency-domain resources for the existing SSB and PDCCH signals is not affected, thereby ensuring the transmission performance of the existing SSB and PDCCH signals.

Exemplary, a multiplexing pattern 1 of the SSB and the PDCCH illustrates that the SSB and the PDCCH are time-division multiplexed. The bandwidths of the CORESET and the frequency-domain positions of the SSB and the PDCCH are not the same within different times, causing the spacing of their frequency-domain resources from the frequency-domain edge of the initial downlink BWP to be different. The time-domain resource for transmitting the SSB is indicated by the system message, and the monitoring occasion and the frequency-domain resources for the PDCCH are determined by the search space information indicated by the system message.

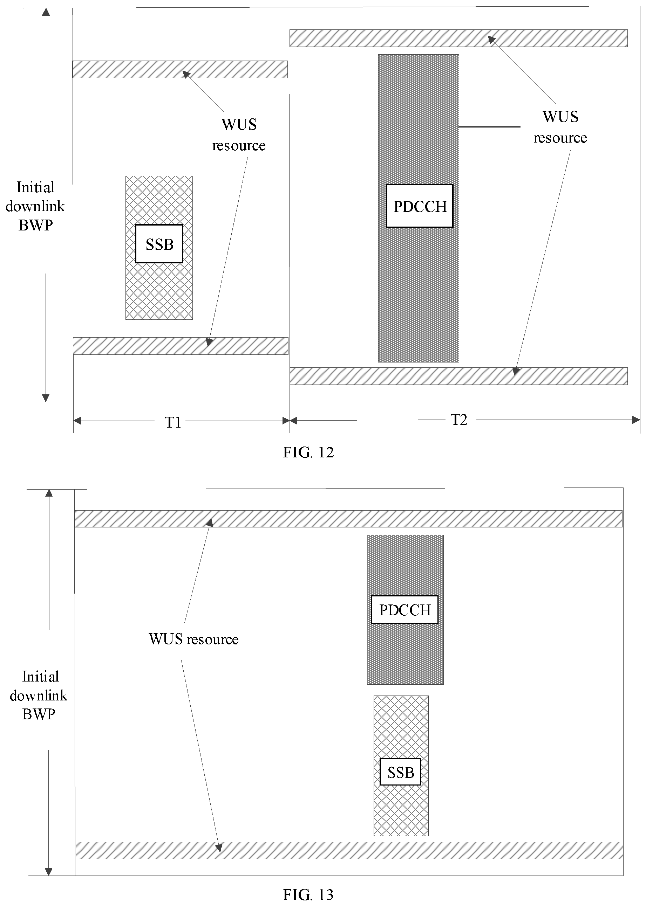

FIG. 12 is a schematic diagram of the wake-up frequency-domain position of another type of LP-WUS according to some embodiments of the present disclosure. As illustrated in FIG. 12, the frequency-domain offset of the LP-WUS resource from the frequency-domain edge of the initial downlink BWP varies from a transmission time for the SSB to a transmission time for the PDCCH. A time interval T1 includes the transmission time for the SSB, and the wake-up frequency-domain resource for the LP-WUS is not overlapped with the frequency-domain resource of the SSB within the time interval T1. A time interval T2 includes the transmission time for the PDCCH, and the wake-up frequency-domain resource for the LP-WUS is not overlapped with the frequency-domain resource of the PDCCH within the time interval T2. The wake-up frequency-domain resources within T1 and T2 may or may not be the same.

That is, the frequency-domain offset within different times may vary; for example, the signals transmitted in the downlink BWP at different times are different, therefore the bandwidth and the frequency-domain position of the signals within the downlink BWP are also different. Exemplary, the multiplexing pattern of the SSB and the PDCCH illustrates that the SSB and the PDCCH are time-division multiplexed. The bandwidths of the CORESET and the frequency-domain positions of the SSB and the PDCCH are not the same within different times, causing the spacing of their frequency-domain resources from the frequency-domain edge of the initial downlink BWP to be different. The time-domain resource for transmitting the SSB is indicated by the system message, and the monitoring occasion and the frequency-domain resources for the PDCCH are determined by the search space information indicated by the system message. As illustrated in FIG. 12, the frequency-domain offset of the WUS resource from the frequency-domain edge of the downlink BWP varies from the transmission time for the SSB to the transmission time for the PDCCH.

In some embodiments, in a case where the frequency-domain position of the SSB and the PDCCH within the downlink BWP is indicated by the multiplexing pattern, the frequency-domain offset is associated with the frequency-domain position of the SSB and the PDCCH within the downlink BWP, and the wake-up frequency-domain resource is not overlapped with the frequency-domain resource of the SSB and the PDCCH.

That is, under frequency division and frequency-time division, it is necessary to consider the positions of the bandwidth of the SSB and the PDCCH following the frequency-domain superposition within the initial downlink BWP, and determine the frequency-domain spacing of the bandwidth following the frequency-domain superposition from the edge, and subsequently determine the frequency-domain offset based on the frequency-domain spacing, ensuring that there is no frequency-domain overlap with the bandwidth following the frequency-domain superposition. Therefore, fragmentation of the frequency-domain resources within the downlink BWP is avoided, ensuring that a larger contiguous bandwidth is preserved in the middle of the downlink BWP. In this way, the use of frequency-domain resources for the existing SSB and PDCCH signals is not affected, thereby ensuring the transmission performance of the existing SSB and PDCCH signals.

Exemplary, a multiplexing pattern 2 of the SSB and the PDCCH illustrates that the SSB and the PDCCH are frequency-division multiplexed. The network device separately transmits the SSB and the PDCCH over different frequencies within the same time interval. FIG. 13 is a schematic diagram of the wake-up frequency-domain position of another type of LP-WUS according to some embodiments of the present disclosure. As illustrated in FIG. 13, in a case where the frequency-domain position of the SSB and the PDCCH of the downlink BWP indicated by the multiplexing pattern, the frequency-domain offset from the LP-WUS resource to the frequency-domain bandwidth edge of the initial downlink BWP may guarantee that the wake-up frequency-domain resource for the LP-WUS is not overlapped with the bandwidth of the SSB and the PDCCH.

In some embodiments, the frequency-domain offset is associated with a first time-domain pattern of the SSB within the downlink BWP.

That is, the frequency-domain offset is related to the time-domain pattern of the SSB within the downlink BWP.

It should be noted that the frequency-domain offset is the offset between the wake-up frequency-domain resource and the frequency-domain bandwidth edge of the downlink BWP containing the wake-up frequency-domain resource, and the offset is not overlapped with the time-domain pattern of the SSB within the downlink BWP. Therefore, fragmentation of the frequency-domain resources within the downlink BWP is avoided, ensuring that a larger contiguous bandwidth is preserved in the middle of the downlink BWP. In this way, the use of frequency-domain resources for the existing SSB signals is not affected, thereby ensuring the transmission performance of the existing SSB signals.

In some embodiments, in a case where the signal transmitted in the downlink BWP includes the SSB within a second time interval indicated by the first time-domain pattern, the frequency-domain offset within the second time interval is associated with the frequency-domain resource of the SSB within the second time interval; and the wake-up frequency-domain resources within the second time interval is not overlapped with the frequency-domain resources of the SSB within the second time interval.

That is, in a case where the signal transmitted in the downlink BWP includes the SSB within the second time interval indicated by the first time-domain pattern, the frequency-domain offset is the offset between the wake-up frequency-domain resource and the frequency-domain bandwidth edge of the downlink BWP containing the wake-up frequency-domain resource, and the offset is not overlapped with the frequency-domain resource of the SSB within the downlink BWP. Therefore, fragmentation of the frequency-domain resources within the downlink BWP is avoided, ensuring that a larger contiguous bandwidth is preserved in the middle of the downlink BWP. In this way, the use of frequency-domain resources for the existing SSB signals is not affected, thereby ensuring the transmission performance of the existing SSB signals.

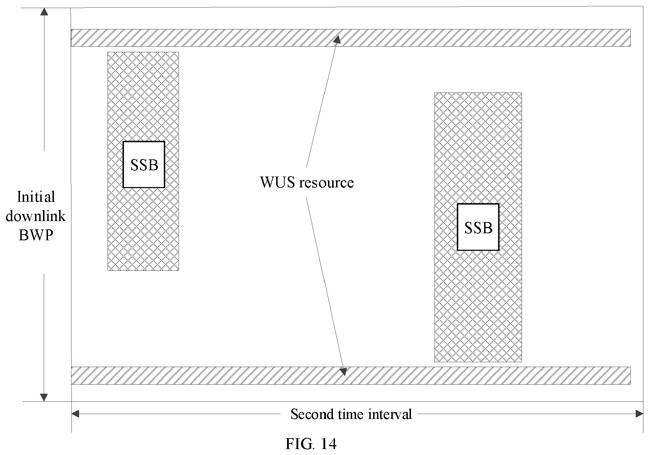

FIG. 14 is a schematic diagram of the wake-up frequency-domain position of another type of LP-WUS according to some embodiments of the present disclosure. Exemplary, as illustrated by the first time-domain pattern of the SSB in FIG. 14, the initial downlink BWP includes the SSB within the second time interval indicated by the first time-domain pattern, and the frequency-domain resource occupied by the SSB varies across different times within the second time interval. Throughout the entire duration of the second time interval, the frequency-domain offset from the LP-WUS resource to the frequency-domain bandwidth edge of the initial downlink BWP may ensure that the LP-WUS resource is not overlapped with the frequency-domain resource occupied by the SSB throughout the entire duration of the second interval.

In some embodiments, the frequency-domain offset is associated with a second time-domain pattern of the PDCCH within the downlink BWP.

That is, the frequency-domain offset is related to the second time-domain pattern of the PDCCH within the downlink BWP.

It should be noted that the frequency-domain offset is the offset between the wake-up frequency-domain resource and the frequency-domain bandwidth edge of the downlink BWP containing the wake-up frequency-domain resource, and the offset is not overlapped with the time-domain pattern of the PDCCH within the downlink BWP. Therefore, fragmentation of the frequency-domain resources within the downlink BWP is avoided, ensuring that a larger contiguous bandwidth is preserved in the middle of the downlink BWP. In this way, the use of frequency-domain resources for the existing PDCCH signals is not affected, thereby ensuring the transmission performance of the existing PDCCH signals.

In some embodiments, in a case where the signal transmitted in the downlink BWP includes the PDCCH within a third time interval indicated by the second time-domain pattern, the frequency-domain offset within the third time interval is associated with the frequency-domain resource of the PDCCH within the third time interval; and the wake-up frequency-domain resources within the third time interval is not overlapped with the frequency-domain resources of the PDCCH within the third time interval.

That is, in a case where the signal transmitted in the downlink BWP includes the PDCCH within the third time interval indicated by the second time-domain pattern, the frequency-domain offset is the offset between the wake-up frequency-domain resource and frequency-domain bandwidth edge of the downlink BWP containing the wake-up frequency-domain resource, and the offset is not overlapped with the frequency-domain resource of the PDCCH within the downlink BWP. Therefore, fragmentation of the frequency-domain resources within the downlink BWP is avoided, ensuring that a larger contiguous bandwidth is preserved in the middle of the downlink BWP. In this way, the use of frequency-domain resources for the existing PDCCH signals is not affected, thereby ensuring the transmission performance of the existing PDCCH signals.

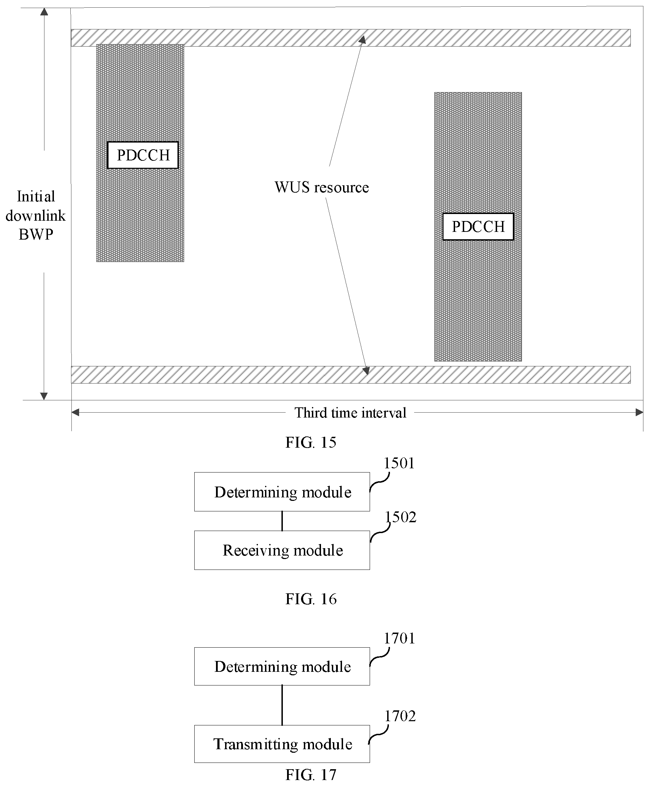

FIG. 15 is a schematic diagram of the wake-up frequency-domain position of another type of LP-WUS according to some embodiments of the present disclosure. Exemplary, as illustrated by the second time-domain pattern in FIG. 15, the initial downlink BWP includes the PDCCH within the third time interval indicated by the second time-domain pattern, and the frequency-domain resource occupied by the PDCCH varies across different times within the third time interval. Throughout the entire duration of the third time interval, the frequency-domain offset from the LP-WUS resource to the frequency-domain bandwidth edge of the initial downlink BWP may ensure that the LP-WUS resource is not overlapped with the frequency-domain resource occupied by the PDCCH throughout the entire duration of the third interval.

FIG. 16 is a schematic block diagram of an apparatus for determining a resource according to some embodiments of the present disclosure. The apparatus for determining a resource has the function implemented by the terminal device to perform the method in FIG. 8, FIG. 9 or FIG. 10.

As illustrated in FIG. 16, the apparatus may include a determining module 1501, configured to determine a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource; wherein the wake-up frequency-domain resource is a frequency-domain resource for receiving a wake-up signal via a first receiver of the terminal device, the wake-up signal being used to wake up a second receiver of the terminal device.

In some embodiments, the frequency-domain offset is indicated by resource indication information transmitted by the network device.

In some embodiments, the resource indication information is further used to indicate a bandwidth of the wake-up frequency-domain resource.

In some embodiments, the frequency-domain offset varies across different time intervals.

In some embodiments, the frequency-domain offset is determined based on indication information.

In some embodiments, the indication information includes at least one of: the bandwidth of the downlink BWP containing the wake-up frequency-domain resource; a position of an SSB within the downlink BWP containing the wake-up frequency-domain resource; a position of the bandwidth of a CORESET within the downlink BWP containing the wake-up frequency-domain resource; a time-domain pattern of an SSB; a time-domain pattern of a PDCCH; or a multiplexing pattern of an SSB and a PDCCH.

In some embodiments, the frequency-domain offset is associated with positions of other signals transmitted within a downlink BWP containing the wake-up frequency-domain resource, wherein the other signals are signals other than the wake-up signal.

In some embodiments, the frequency-domain offset is associated with a multiplexing pattern of the SSB and the PDCCH in the downlink BWP.

In some embodiments, in a case where the signal transmitted in the downlink BWP includes the SSB and the PDCCH within a first time interval indicated by the multiplexing pattern, the frequency-domain offset within the first time interval is associated with the frequency-domain resource of the SSB and the PDCCH within the first time interval, and the wake-up frequency-domain resource within the first time interval is not overlapped with the frequency-domain resources of the SSB and the PDCCH within the first time interval.

In some embodiments, in a case where frequency-domain positions of the SSB and the PDCCH within the downlink BWP are indicated by the multiplexing pattern, the frequency-domain offset is associated with the frequency-domain positions of the SSB and the PDCCH within the downlink BWP, and the wake-up frequency-domain resource is not overlapped with the frequency-domain resources of the SSB and the PDCCH.

In some embodiments, the frequency-domain offset is associated with a first time-domain pattern of the SSB in the downlink BWP.

In some embodiments, in a case where the signal transmitted in the downlink BWP comprises the SSB within a second time interval indicated by the first time-domain pattern, the frequency-domain offset within the second time interval is associated with the frequency-domain resource of the SSB within the second time interval; and the wake-up frequency-domain resource does not overlap with the frequency-domain resource of the SSB within the second time interval.

In some embodiments, the frequency-domain offset is associated with a second time-domain pattern of the PDCCH in the downlink BWP.

In some embodiments, in a case where the signal transmitted in the downlink BWP includes a PDCCH within a third time interval indicated by a second time-domain pattern, the frequency-domain offset within the third time interval is associated with the frequency-domain resource of the PDCCH within the third time interval; and the wake-up frequency-domain resource within the third time interval is not overlapped with the frequency-domain resource of the PDCCH within the third time interval.

In some embodiments, the frequency-domain resource offset is associated with the frequency-domain position of the SSB within the downlink BWP containing the wake-up frequency-domain resource; and the wake-up frequency-domain resource is not overlapped with the frequency-domain resource of the SSB within the downlink BWP.

In some embodiments, the frequency-domain resource is associated with a frequency-domain position of the PDCCH within the downlink BWP containing the wake-up frequency-domain resource; and the wake-up frequency-domain resource is not overlapped with the frequency-domain resource of the PDCCH within the downlink BWP.

In some embodiments, the frequency-domain offset is associated with a frequency-domain position within the downlink BWP containing the wake-up frequency-domain resource occupied by the CORESET, and the wake-up frequency-domain resource does not overlap with the frequency-domain resource of the CORESET within the downlink BWP.

In some embodiments, the frequency-domain offset is associated with the bandwidth of the downlink BWP containing the wake-up frequency-domain resource.

FIG. 17 is a schematic block diagram of an apparatus for determining a resource according to some embodiments of the present disclosure. The apparatus for determining a resource has the function implemented by the network device to perform the method in FIG. 8, FIG. 9 or FIG. 10.

As illustrated in FIG. 17, the apparatus may include: a determining module 1701, configured to determine a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource; and a transmitting module, configured to transmit the wake-up signal based on the wake-up frequency-domain resource; wherein the wake-up frequency-domain resource is a frequency-domain resource for receiving a wake-up signal via a first receiver of the terminal device, the wake-up signal being used to wake up a second receiver of the terminal device.

In some embodiments, the frequency-domain offset is indicated by resource indication information transmitted by the network device.

In some embodiments, the resource indication information is further used to indicate a bandwidth of the wake-up frequency-domain resource.

In some embodiments, the frequency-domain offset varies across different time intervals.

In some embodiments, the frequency-domain offset is determined based on indication information.

In some embodiments, the indication information includes at least one of: the bandwidth of the downlink BWP containing the wake-up frequency-domain resource; a position of an SSB within the downlink BWP containing the wake-up frequency-domain resource; a position of the bandwidth of a CORESET within the downlink BWP containing the wake-up frequency-domain resource; a time-domain pattern of an SSB; a time-domain pattern of a PDCCH; or a multiplexing pattern of an SSB and a PDCCH.

In some embodiments, the frequency-domain offset is associated with positions of other signals transmitted within a downlink BWP containing the wake-up frequency-domain resource, wherein the other signals are signals other than the wake-up signal.

In some embodiments, the frequency-domain offset is associated with a multiplexing pattern of the SSB and the PDCCH in the downlink BWP.

In some embodiments, in a case where the signal transmitted in the downlink BWP includes the SSB and the PDCCH within a first time interval indicated by the multiplexing pattern, the frequency-domain offset within the first time interval is associated with the frequency-domain resource of the SSB and the PDCCH within the first time interval, and the wake-up frequency-domain resource within the first time interval is not overlapped with the frequency-domain resources of the SSB and the PDCCH within the first time interval.

In some embodiments, in a case where frequency-domain positions of the SSB and the PDCCH within the downlink BWP are indicated by the multiplexing pattern, the frequency-domain offset is associated with the frequency-domain positions of the SSB and the PDCCH within the downlink BWP, and the wake-up frequency-domain resource is not overlapped with the frequency-domain resources of the SSB and the PDCCH.

In some embodiments, the frequency-domain offset is associated with a first time-domain pattern of the SSB in the downlink BWP.

In some embodiments, in a case where the signal transmitted in the downlink BWP includes the SSB within a second time interval indicated by the first time-domain pattern, the frequency-domain offset within the second time interval is associated with the frequency-domain resource of the SSB within the second time interval; and the wake-up frequency-domain resource does not overlap with the frequency-domain resource of the SSB within the second time interval.

In some embodiments, the frequency-domain offset is associated with a second time-domain pattern of the PDCCH in the downlink BWP.

In some embodiments, in a case where the signal transmitted in the downlink BWP includes a PDCCH within a third time interval indicated by a second time-domain pattern, the frequency-domain offset within the third time interval is associated with the frequency-domain resource of the PDCCH within the third time interval; and the wake-up frequency-domain resource within the third time interval is not overlapped with the frequency-domain resource of the PDCCH within the third time interval.

In some embodiments, the frequency-domain offset is associated with the frequency-domain position of the SSB within the downlink BWP containing the wake-up frequency-domain resource; and the wake-up frequency-domain resource is not overlapped with the frequency-domain resource of the SSB within the downlink BWP.

In some embodiments, the frequency-domain offset is associated with a frequency-domain position of the PDCCH within the downlink BWP containing the wake-up frequency-domain resource; and the wake-up frequency-domain resource is not overlapped with the frequency-domain resource of the PDCCH within the downlink BWP.

In some embodiments, the frequency-domain offset is associated with a frequency-domain position within the downlink BWP containing the wake-up frequency-domain resource occupied by the CORESET, and the wake-up frequency-domain resource does not overlap with the frequency-domain resource of the CORESET within the downlink BWP.

In some embodiments, the frequency-domain offset is associated with the bandwidth of the downlink BWP containing the wake-up frequency-domain resource.

Regarding the above apparatus embodiments, the specific manner in which each module performs the operations has been described in detail in the method embodiments of the present disclosure, and will not be elaborated herein.

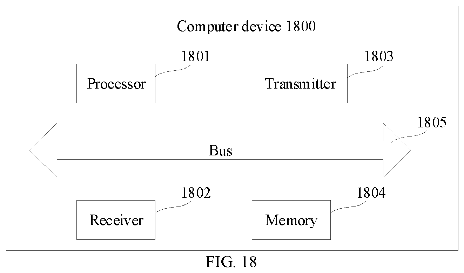

FIG. 18 is a schematic structural diagram of a communication device 1800 according to some embodiments of the present disclosure. The communication device 1800 may include a processor 1801, a receiver 1802, a transmitter 1803, a memory 1804 and a bus 1805.

The processor 1801 includes one or more processing cores, wherein the processor 1801 executes one or more software programs and modules to perform various functions and information processing.

The receiver 1802 and the transmitter 1803 may be implemented as one communication component, wherein the communication component may be a communication chip. The communication chip may also be referred to as a transceiver. The memory 1804 is connected to the processor 1801 via the bus 1805. The memory may store one or more computer programs, wherein the processor 1801 is configured to execute the one or more computer programs to perform the various steps of the embodiments of the present disclosure.

Additionally, the memory 1804 may be implemented by any type of transitory or non-transitory storage device or a combination thereof, and the transitory or non-transitory storage device includes but is not limited to: a random-access memory (RAM), a read-only memory (ROM), an erasable programmable read-only memory (EPROM), an electrically erasable programmable read-only memory (EEPROM), a flash memory or other solid-state storage devices, a compact disc read-only memory (CD-ROM), a high-density digital video disc (DVD) or other optical storage devices, a tape cassette, a magnetic tape, a disk storage or other magnetic storage devices.

In an exemplary solution where the communication device 1800 is implemented as the terminal device, the receiver 1802 and the processor 1801 execute the one or more computer programs to cause the communication device to implement the various steps performed by the terminal device in any one of the methods in FIG. 8, FIG. 9, or FIG. 10. The receiver 1802 may correspondingly perform the methods and steps implemented by the receiving module 1502 in FIG. 16, and the transmitter 1803 may correspondingly perform the methods and steps implemented by the transmitting module.

In an exemplary solution where the communication device 1800 is implemented as the network device, the transmitter 1803 and the processor execute the one or more computer programs to cause the communication device to implement the various steps performed by the network device in any one of the methods in FIG. 8, FIG. 9, or FIG. 10. The transmitter 1803 may correspondingly perform the methods and steps implemented by the transmitting module 1702 in FIG. 17, and the receiver 1802 may correspondingly perform the methods and steps implemented by the receiving module.

Some embodiments of the present disclosure further provide a computer-readable storage medium storing one or more computer programs therein. The one or more computer programs, when loaded and run by a processor, implements the steps performed by the terminal or the network device in the method in FIG. 8, FIG. 9, or FIG. 10.

Some embodiments of the present disclosure further provide a chip. The chip includes programmable electric circuitry and/or one or more program instructions, wherein the chip, when running, causes the communication device to implement all or part of the steps performed by the terminal device or the network device in the method in FIG. 8, FIG. 9, or FIG. 10.

Some embodiments of the present disclosure further provide a computer program product. The computer program product includes one or more computer instructions, wherein the one or more computer instructions are stored in the computer-readable storage medium. The one or more computer instructions, when loaded and execute by a processor in the communication device, cause the communication device to implement all or part of the steps performed by the terminal device or the network device in the method described in FIG. 8, FIG. 9, or FIG. 10.

Some embodiments of the present disclosure further provide a computer program. The computer program is run by a processor in the communication device to perform all or part of the steps in the method in FIG. 8, FIG. 9, or FIG. 10.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements and the like, made within the spirit and principle of the present disclosure should fall within the protection scope of the present disclosure.

**Claims**

1.    A method for determining resources, performed by a terminal device, the method comprising:

determining a wake-up frequency-domain resource based on a frequency-domain offset, wherein the frequency-domain offset is an offset between the wake-up frequency-domain resource and a frequency-domain bandwidth edge of a downlink bandwidth part (BWP) containing the wake-up frequency-domain resource;
wherein the wake-up frequency-domain resource is a frequency-domain resource for receiving a wake-up signal via a first receiver of the terminal device, the wake-up signal is used to wake up a second receiver of the terminal device.

2.    The method according to claim 1, wherein the frequency-domain offset is indicated by resource indication information transmitted by a network device.

3.    The method according to claim 2, wherein the resource indication information is further used to indicate a bandwidth of the wake-up frequency-domain resource.

**4.** The method according to claim 3, wherein the frequency-domain offset varies across different time intervals.

**5.** The method according to claim 1, wherein the frequency-domain offset is determined based on indication information.

**6.** The method according to claim 5, wherein the indication information comprises at least one of:

> a bandwidth of the downlink BWP containing the wake-up frequency-domain resource;
> a position of a synchronization signal block (SSB) within the downlink BWP containing the wake-up frequency-domain resource;
> a position of a bandwidth of a control resource set (CORESET) within the downlink BWP containing the wake-up frequency-domain resource;
> a time-domain pattern of an SSB;
> a time-domain pattern of a physical downlink control channel (PDCCH); or
> a multiplexing pattern of an SSB and a PDCCH.

**7.** The method according to any one of claims 2 to 6, wherein the frequency-domain offset is associated with positions of other signals transmitted within a downlink BWP containing the wake-up frequency-domain resource, wherein the other signals are signals other than the wake-up signal.

**8.** The method according to claim 7, wherein the frequency-domain offset is associated with a multiplexing pattern of a synchronization signal block (SSB) and a physical downlink control channel (PDCCH) in the downlink BWP.

**9.** The method according to claim 8, wherein in a case where the signal transmitted in the downlink BWP comprises an SSB and a PDCCH within a first time interval indicated by the multiplexing pattern, the frequency-domain offset within the first time interval is associated with the frequency-domain resource of the SSB and the PDCCH within the first time interval, and the wake-up frequency-domain resource within the first time interval is not overlapped with the frequency-domain resources of the SSB and the PDCCH within the first time interval.

**10.** The method according to claim 8, wherein in a case where frequency-domain positions of an SSB and a PDCCH within the downlink BWP are indicated by the multiplexing pattern, the frequency-domain offset is associated with the frequency-domain positions of the SSB and the PDCCH within the downlink BWP, and the wake-up frequency-domain resource is not overlapped with the frequency-domain resources of the SSB and the PDCCH.

**11.** The method according to claim 7, wherein the frequency-domain offset is associated with a first time-domain pattern of a synchronization signal block (SSB) in the downlink BWP.

**12.** The method according to claim 11, wherein in a case where the signal transmitted in the downlink BWP comprises an SSB within a second time interval indicated by the first time-domain pattern, the frequency-domain offset within the second time interval is associated with the frequency-domain resource of the SSB within the second time interval; and the wake-up frequency-domain resource does not overlap with the frequency-domain resource of the SSB within the second time interval.

**13.** The method according to claim 7, wherein the frequency-domain offset is associated with a second time-domain pattern of a physical downlink control channel (PDCCH) in the downlink BWP.

**14.** The method according to claim 13, wherein in a case where the signal transmitted in the downlink BWP comprises a PDCCH within a third time interval indicated by a second time-domain pattern, the frequency-domain offset within the third time interval is associated with the frequency-domain resource of the PDCCH within the third time interval; and the wake-up frequency-domain resource within the third time interval is not overlapped with the frequency-domain resource of the PDCCH within the third time interval.

**15.** The method according to any one of claims 2 to 6, wherein the frequency-domain offset is associated with a frequency-domain position of a synchronization signal block (SSB) within the downlink BWP containing the wake-up frequency-domain resource; and the wake-up frequency-domain resource is not overlapped with the frequency-domain resource of the SSB within the downlink BWP.

**16.** The method according to any one of claims 2 to 6, wherein the frequency-domain offset is associated with a frequency-domain position of a physical downlink control channel (PDCCH) within the downlink BWP containing the wake-up frequency-domain resource; and the wake-up frequency-domain resource is not overlapped with the frequency-domain resource of the PDCCH within the downlink BWP.

**17.** The method according to any one of claims 2 to 6, wherein the frequency-domain offset is associated with a frequency-domain position within the downlink BWP containing the wake-up frequency-domain resource occupied by a control resource set (CORESET), and the wake-up frequency-domain resource does not overlap with the frequency-domain resource of the CORESET within the downlink BWP.

18. The method according to any one of claims 2 to 6, wherein the frequency-domain offset is associated with a bandwidth of the downlink BWP containing the wake-up frequency-domain resource.

19. A method for determining resources, performed by a network device, the method comprising:

determining a wake-up frequency-domain resource based on a frequency-domain offset, wherein the frequency-domain offset is an offset between the wake-up frequency-domain resource and a frequency-domain bandwidth edge of a downlink bandwidth part (BWP) containing the wake-up frequency-domain resource; and
transmitting a wake-up signal based on the wake-up frequency-domain resource; wherein the wake-up signal is a signal received by a terminal device via a first receiver of the terminal device, and the wake-up signal is used to wake up a second receiver of the terminal device.

20. The method according to claim 19, further comprising:
transmitting resource indication information to the terminal device, wherein resource indication information indicates the frequency-domain offset.

21. The method according to claim 20, wherein the resource indication information further indicates a bandwidth of the wake-up frequency-domain resource.

22. The method according to claim 21, wherein the frequency-domain offset varies across different time intervals.

23. The method according to any one of claims 19 to 22, wherein the frequency-domain offset is determined based on indication information.

24. The method according to claim 23, wherein the indication information comprises at least one of:

a bandwidth of the BWP containing the wake-up frequency-domain resource;
a position within the downlink BWP containing the wake-up frequency-domain resource occupied by a synchronization signal block (SSB);
a position within the downlink BWP containing the wake-up frequency-domain resource occupied by a bandwidth of a control resource set (CORESET);

a time-domain pattern of an SSB;
a time-domain pattern of a physical downlink control channel (PDCCH); or
a multiplexing pattern of an SSB and a PDCCH.

25. The method according to any one of claims 20 to 24, wherein the frequency-domain offset is associated with a position of other signals transmitted within a downlink BWP containing the wake-up frequency-domain resource; and the other signals are signals other than the wake-up signal.

26. The method according to claim 25, wherein the frequency-domain offset is associated with a multiplexing pattern of an SSB and a PDCCH contained in the downlink BWP.

27. The method according to claim 26, wherein in a case where the signal transmitted in the downlink BWP comprises an SSB and a PDCCH within a first time interval indicated by the multiplexing pattern, the frequency-domain offset within the first time interval is associated with the frequency-domain resources of the SSB and the PDCCH within the first time interval, and the wake-up frequency-domain resource within the first time interval is not overlapped with the resources of the SSB and the PDCCH within the first time interval.

28. The method according to claim 26, wherein in a case where frequency-domain positions of an SSB and a PDCCH within the downlink BWP are indicated by the multiplexing pattern, the frequency-domain offset is associated with the frequency-domain positions of the SSB and the PDCCH within the downlink BWP, and the wake-up frequency-domain resource is not overlapped with the frequency-domain resources of the SSB and the PDCCH.

29. The method according to claim 25, wherein the frequency-domain offset is associated with a first time-domain pattern of an SSB contained in the downlink BWP.

30. The method according to claim 29, wherein in a case where the signal transmitted in the downlink BWP comprises an SSB within a second time interval indicated by the first time-domain pattern, the frequency-domain offset within the second time interval is associated with the frequency-domain resource of the SSB within the second time interval, and the wake-up frequency-domain resource within the second time interval is not overlapped with the frequency-domain resource of the SSB within the second time interval.

31. The method according to claim 25, wherein the frequency-domain offset is associated with a second time-domain pattern of the PDCCH contained in the downlink BWP.

32. The method according to claim 31, wherein in a case where the signal transmitted in the downlink BWP comprises a PDCCH within a third time interval indicated by the second time-domain pattern, the frequency-domain offset within the third time interval is associated with the frequency-domain resource of the PDCCH within the third time interval, and the wake-up frequency-domain resource within the third time interval is not overlapped with the frequency-domain resource of the PDCCH within the third time interval.

33. The method according to any one of claims 20 to 24, wherein the frequency-domain offset is associated with a frequency-domain position within the downlink BWP containing the wake-up frequency-domain resource occupied by an SSB; and the wake-up frequency-domain resource is not overlapped with the frequency-domain resource of the SSB contained in the downlink BWP.

34. The method according to any one of claims 20 to 24, wherein the frequency-domain offset is associated with a frequency-domain position within the downlink BWP containing the wake-up frequency-domain resource occupied by a PDCCH; and the wake-up frequency-domain resource is not overlapped with the frequency-domain resource of the PDCCH contained in the downlink BWP.

35. The method according to any one of claims 20 to 24, wherein the frequency-domain offset is associated with a frequency-domain position within the downlink BWP containing the wake-up frequency-domain resource occupied by a CORESET; and the wake-up frequency-domain resource is not overlapped with the frequency-domain resource of the CORESET contained in the downlink BWP.

36. The method according to any one of claims 20 to 24, wherein the frequency-domain offset is associated with a bandwidth of the downlink BWP containing the wake-up frequency-domain resource.

37. An apparatus for determining a resource, comprising:

a determining module, configured to determine a wake-up frequency-domain resource based on a frequency-domain offset, wherein the frequency-domain offset is an offset between the wake-up frequency-domain resource and a frequency-domain bandwidth edge of a downlink bandwidth part (BWP) containing the wake-up frequency-domain resource;

wherein the wake-up frequency-domain resource is a frequency-domain resource for receiving a wake-up signal via a first receiver of the terminal device, the wake-up signal is used to wake up a second receiver of the terminal device.

38. An apparatus for determining a resource, comprising:

a determining module, configured to determine a wake-up frequency-domain resource based on a frequency-domain offset, wherein the frequency-domain offset is an offset between the wake-up frequency-domain resource and a frequency-domain bandwidth edge of a downlink bandwidth part (BWP) containing the wake-up frequency-domain resource; and
a transmitting module, configured to transmit the wake-up signal based on the wake-up frequency-domain resource; wherein the wake-up frequency-domain resource is a frequency-domain resource for receiving a wake-up signal via a first receiver of the terminal device, the wake-up signal is used to wake up a second receiver of the terminal device.

39. A terminal device, comprising: a processor, a memory, and a transceiver;
wherein the memory stores one or more computer programs, and the processor is configured to call and run the one or more computer programs to cause the terminal device to perform the method for determining a resource as defined in any of the claims 1 to 18.

40. A network device, comprising: a processor, a memory, and a transceiver;
wherein the memory stores one or more computer programs, and the processor is configured to call and run the one or more computer programs to cause the network device to perform the method for determining a resource as defined in any of the claims 19 to 36.

41. A computer-readable storage medium storing one or more computer programs; wherein the one or more computer programs, when loaded and run by a processor in a communication device, cause the communication device to perform the method for determining a resource as defined in any of the claims 1 to 36.

42. A chip, comprising: programmable logic circuitry and/or one or more program instructions; wherein the chip, when running on a communication device, is configured to cause the communication device to perform the method for determining a resource as defined in any of the claims 1 to 36.

**EP 4 770 234 A1**

**43.** A computer program product, comprising: one or more computer instructions stored in a computer-readable storage medium; wherein the one or more computer instructions when called and executed by a processor in a communication device, cause the communication device to perform the method for determining a resource as defined in any of the claims 1 to 36.

**44.** A computer program, wherein the computer program, when called and run by a processor in a communication device, causes the communication device to perform the method as defined in any of the claims 1 to 36.

EP 4 770 234 A1

FIG. 1

Wake-up signal

UE main receiver

Wake-up signal

Wake-up receiver

FIG. 2

Other signals

LP-WUS

SC#K-1

IDFT

SC#1

SC#0

OFDM symbol

FIG. 3

Other signals

LP-WUS

SC#K-1

m=1

m=0

IDFT

SC#0

OFDM symbol

FIG. 4

SC#K-1

Other signals

$\vdots$

$\vdots$

IDFT

OFDM symbol

LP-WUS

m=1   00..010..00

m=0   010..0..00

$\vdots$

$\vdots$

SC#0

**FIG. 5**

Other signals

SC#K-1

$\vdots$

$\vdots$

IDFT

OFDM symbol

Time-domain LP-WUS
0..(M-1)

Signal generation

DFT

Truncation S->N

LP-WUS 0..(N-1)

M=4bit
'1001'

$\vdots$

SC#1

SC#0

**FIG. 6**

$$N_{\text{BWP}}^{\text{size}} - 1 - RB_{\text{BWP}}^{\text{offset}} - \left\lfloor (r_{\text{PUCCH}} - 8)/N_{\text{CS}} \right\rfloor$$

PUCCH resource

Initial downlink BWP

May be used for PUSCH transmission

$$RB_{\text{BWP}}^{\text{offset}} + \left\lfloor r_{\text{PUCCH}}/N_{\text{CS}} \right\rfloor$$

FIG. 7

Terminal device

Network device

S801, determining a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource.

S802, determining a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource.

S803, transmitting a wake-up signal based on the wake-up frequency-domain resource; wherein the wake-up signal is a signal received by a terminal device via a first receiver of the terminal device, and the wake-up signal is used to wake up a second receiver of the terminal device.

FIG. 8

**Terminal device**

**Network device**

**S901, the network transmits resource indication information to the terminal device, and accordingly, the terminal receives the resource indication information, wherein the resource indication information is used to indicate the frequency-domain offset.**

S902, determining a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource.

S903, determining a wake-up frequency-domain resource based on a frequency-domain offset, wherein the frequency-domain offset is an offset between the wake-up frequency-domain resource and a frequency-domain bandwidth edge of a downlink BWP containing the wake-up frequency-domain resource.

S904, transmitting a wake-up signal based on the wake-up frequency-domain resource; wherein the wake-up signal is a signal received by a terminal device via a first receiver of the terminal device, and the wake-up signal is used to wake up a second receiver of the terminal device.

FIG. 9

Terminal
device

Network
device

S1001, determining a wake-up frequency-
domain resource based on a frequency-domain
offset, wherein the frequency-domain offset is
an offset between the wake-up frequency-
domain resource and a frequency-domain
bandwidth edge of a downlink BWP containing
the wake-up frequency-domain resource, the
frequency-domain offset is determined based
on indication information.

S1002, determining a wake-up frequency-
domain resource based on a frequency-domain
offset, wherein the frequency-domain offset is
an offset between the wake-up frequency-
domain resource and a frequency-domain
bandwidth edge of a downlink BWP containing
the wake-up frequency-domain resource, the
frequency-domain offset is determined based
on indication information.

S1003, transmitting a wake-up signal based on the wake-up
frequency-domain resource; wherein the wake-up signal is a
signal received by a terminal device via a first receiver of the
terminal device, and the wake-up signal is used to wake up a
second receiver of the terminal device.

FIG. 10

$RB_{BWP}^{size}$ - $RB_{BWP}^{offset2}$

PDCCH,
PDSCH, SSB
transmission

WUS
resource

Initial
downlink
BWP

$RB_{BWP}^{offset1}$

FIG. 11

FIG. 12

FIG. 13

Initial
downlink
BWP

SSB

WUS resource

SSB

Second time interval

FIG. 14

FIG. 15

FIG. 16

FIG. 17

Computer device 1800

1801

Processor

1803

Transmitter

1805

Bus

1802

Receiver

1804

Memory

FIG. 18

## INTERNATIONAL SEARCH REPORT

| International application No. |
| --- |
| **PCT/CN2023/114324** |

### A. CLASSIFICATION OF SUBJECT MATTER

H04W 72/0457(2023.01)i

According to International Patent Classification (IPC) or to both national classification and IPC

### B. FIELDS SEARCHED

Minimum documentation searched (classification system followed by classification symbols)

IPC: H04W,H04L,H04B

Documentation searched other than minimum documentation to the extent that such documents are included in the fields searched

Electronic data base consulted during the international search (name of data base and, where practicable, search terms used)

CNTXT, ENTXTC, DWPI, IEEE, 3GPP: 频域, 偏移, 唤醒, 下行带宽部分, 指示, 节能, 节电, 省电, frequency domain, shift, wake up, WUS, BWP, carrier bandwidth part, indicat+, save, LP-WUS

### C. DOCUMENTS CONSIDERED TO BE RELEVANT

| Category* | Citation of document, with indication, where appropriate, of the relevant passages | Relevant to claim No. |
| --- | --- | --- |
| Y | CN 116367277 A (HUAWEI TECHNOLOGIES CO., LTD.) 30 June 2023 (2023-06-30) description, paragraphs [0139]-[0402], and figures 2a-9 | 1-44 |
| Y | CN 110839214 A (BEIJING SPREADTRUM HI-TECH COMMUNICATIONS TECHNOLOGY CO., LTD.) 25 February 2020 (2020-02-25) description, paragraphs [0043]-[0060] | 1-44 |
| A | CN 115499929 A (SPREADTRUM COMMUNICATIONS (SHANGHAI) CO., LTD.) 20 December 2022 (2022-12-20) entire document | 1-44 |
| A | CN 115769663 A (LENOVO (SINGAPORE) PTE. LTD.) 07 March 2023 (2023-03-07) entire document | 1-44 |
| A | WO 2020252385 A1 (QUALCOMM INC.) 17 December 2020 (2020-12-17) entire document | 1-44 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **08 May 2024** | **15 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/114324**

| Patent document cited in search report | | | Publication date (day/month/year) | Patent family member(s) | | | Publication date (day/month/year) |
|---|---|---|---|---|---|---|---|
| CN | 116367277 | A | 30 June 2023 | WO | 2023116441 | A1 | 29 June 2023 |
| CN | 110839214 | A | 25 February 2020 | | None | | |
| CN | 115499929 | A | 20 December 2022 | WO | 2020088257 | A1 | 07 May 2020 |
| | | | | CN | 111148191 | A | 12 May 2020 |
| | | | | EP | 3876609 | A1 | 08 September 2021 |
| | | | | US | 2021400585 | A1 | 23 December 2021 |
| CN | 115769663 | A | 07 March 2023 | KR | 20230038192 | A | 17 March 2023 |
| | | | | WO | 2022013717 | A2 | 20 January 2022 |
| | | | | US | 2023276527 | A1 | 31 August 2023 |
| | | | | US | 2023276364 | A1 | 31 August 2023 |
| | | | | EP | 4179669 | A2 | 17 May 2023 |
| | | | | JP | 2023534266 | A | 08 August 2023 |
| | | | | WO | 2022013700 | A1 | 20 January 2022 |
| | | | | US | 2023262738 | A1 | 17 August 2023 |
| | | | | EP | 4179836 | A2 | 17 May 2023 |
| | | | | WO | 2022013699 | A2 | 20 January 2022 |
| | | | | US | 2023262601 | A1 | 17 August 2023 |
| | | | | WO | 2022013698 | A2 | 20 January 2022 |
| | | | | EP | 4179794 | A1 | 17 May 2023 |
| | | | | KR | 20230038199 | A | 17 March 2023 |
| | | | | JP | 2023535892 | A | 22 August 2023 |
| WO | 2020252385 | A1 | 17 December 2020 | EP | 3984328 | A1 | 20 April 2022 |
| | | | | US | 2020396685 | A1 | 17 December 2020 |
| | | | | CN | 113924819 | A | 11 January 2022 |

Form PCT/ISA/210 (patent family annex) (July 2022)